# EUROPEAN PATENT APPLICATION

(11) **EP 4 487 991 A2**
(43) Date of publication of application: **08.01.2025**
(21) Application number: 24185842.2
(22) Date of filing: 01.07.2024
(51) Int. Cl.: B23Q 1/03, B23Q 17/22, B23Q 17/24, B27M 1/08, G05B 19/00

(54) **REMOTE POSITIONING SYSTEM FOR WOODWORKING MACHINES**

(30) Priority: 06.07.2023 IT 202300014172
(71) Applicant: SCM Group S.p.A., 47921 Rimini (RN) (IT)
(72) Inventor: BERTUCCIOLI, Alessandro, 47921 RIMINI (IT); MUCCIOLI, Federico, 47921 RIMINI (IT); GESSI, Luca, 47921 RIMINI (IT)
(74) Representative: Tiburzi, Andrea

(57) **Abstract**

The present invention relates to a machine (M) for working pieces, such as panels made of wood, glass, fiberglass, plastic, metal, ceramic, or the like, said machine (M) comprising a working surface (2), in its turn comprising a plurality of supporting bars (21_{a,b,...,k,...n}), for supporting the pieces to be machined, one or more movable elements (24_{a,b,...,k,...n}), each of which configured to support and/or retain said pieces, wherein each of said one or more movable elements is slidably coupled and movable along a respective bar of said plurality of bars (21 _{a,b,...,k,...n}), a measuring system capable of measuring the position values of said one or more movable elements (24_{a,b,...,k,...n}), at least one control logic unit (U) capable of receiving one or more configurations of said working surface (2) for machining said pieces, operatively connected to the measurement system to receive said position values, and making a comparison between said one or more configurations and said position values received from the measurement system, a precision positioning system of said one or more movable elements, equipped with a positioning aid device (25) of said one or more movable elements (24_{a,b,...,k,...n}), wherein said precision positioning system comprises at least one signaling device (251'), capable of cooperating with said positioning aid device (25), to provide indications to an operator, for the positioning of one or more movable elements (24_{a,b,...,k,...n}), based on said comparison.

The present invention also relates to a system for precision positioning of movable elements that can be connected to said machine (M).

The present invention also relates to an operating method of said machine (M).

## Description

The present invention concerns a machine, in particular for working pieces made of wood, ceramic, plastic, glass, fiberglass and the like, equipped with a positioning system and a measurement system.

The present invention also concerns a positioning system that can be integrated into a machine for working pieces made of wood, ceramic, plastic, glass, fiberglass and the like.

The present invention also concerns an operating method of said positioning system.

### Field of invention

More in detail, the invention concerns a positioning and measurement system of the aforementioned type, designed and realized in particular for a numerically controlled working center, in particular for working pieces made of wood, ceramic, plastic, glass, fiberglass and the like, provided with one or more bars, along which movable elements are positioned and slidably coupled for supporting, resting, or fixing of the piece to be worked, in which said bar comprises a mobile supporting base capable of sliding along the working surface.

Said positioning and measurement system is designed and realized in particular for measuring the position of said movable elements for supporting or fixing the piece along said supporting bar, so as to determine a precise positioning of the piece to which said movable elements are associated, but which can be used for any machine equipped with movable elements capable of providing a reference relating to the pieces to be worked, of which it is necessary to measure the position within the machine, and in particular for points that are difficult to be reached by an operator.

In the following the description will be directed to a positioning system and a measurement system connected to a numerically controlled working center for the working of wooden panels, equipped with at least one bar and one or more movable elements for supporting or fixing the piece to be worked, coupled to the bar and subject to manual movement, but it is clear that it should not be considered limited to this specific use.

### Prior art

Working centers, which comprise a working surface, on which the pieces to be worked are fixed, and one or more operating groups equipped with working units, capable of having up to 5 interpolating axes, are known.

These working centers are equipped with magazines and automatic systems for tool replacement, making completely automatic the working process of the pieces.

The working surface includes a plurality of bars, onto which suction cups or clamps are slidably coupled, suitable for fixing the piece being worked.

As is well known, in these manual working centers, the bars and the suction cups are manually positioned along the base of the working center.

Therefore, it is necessary for an operator to exactly position the suction cups on the bars in order to carry out the required working.

Therefore, the operator does not receive any information on the correct positioning of said movable elements, which entails risks of incorrect positioning.

In fact, the operator manually moves the support up to a desired height based on the reading on a metric line. Therefore, the displacement and its reading result inaccurate.

Currently, working centers are known, provided with a precision measurement system and equipped with movable elements to hold or fix the wooden panel to be worked, which are manually moved to the desired position communicated to the operator with indicators placed on the movable elements themselves.

Semi-automatic working centers, in which the positioning of the movable elements, i.e. bars and suction cups, occurs manually, with the support of linear measurement systems such as magnetic scales or magneto strictive systems coupled to the movable elements, to provide feedback on the positioning manually carried out by the operator, are also known.

However, these working centers have the disadvantage of having substantial and cumbersome wiring for the operation of the measurement systems.

A measurement system is also known, suitable for measuring the position of the suction cups and bars, in communication with a logic control unit, which, knowing the desired position at which to place the suction cups and the bars, emits a signal for the operator for the correct positioning.

Currently, as is well known, in working centers for working wood with bars having a dimension, along an axis, greater than 1300 mm, the manual operation of positioning the surface accessories is not ergonomic, in particular the positioning of the movable elements, slidingly coupled to the bars, for supporting or fixing the panels to be worked.

As is known, the presence of a pusher can facilitate the movement of said movable elements along a supporting bar.

However, it is clear that this positioning procedure does not allow the identification of the correct positioning of the suction cups and is costly in terms of time, as the lack of ergonomics of the positioning tools implies a high number of operations to achieve the desired positioning.

Although the presence of indicators arranged on the movable elements can provide correct information on achieving the desired positioning, beyond a certain distance between the operator and the indicators, reading them is less easy.

In fact, due to the high distance between the operator and the desired positioning quota, it is difficult to establish the accuracy of the real positioning.

Therefore, the need to provide the correct positioning of the mobile bases that can be coupled to a supporting bar through a system that guarantees the ergonomics of operations and increases the performance of the machine associated with, it by reducing the positioning times of said mobile bases appears evident.

### Scope of the invention

In light of the above, it is therefore scope of the present invention to provide a system for positioning the movable elements for supporting or fixing the workpiece, which can be coupled to a supporting bar of a machine for working wooden pieces including a mechanical positioning means.

The system comprises a plurality of sensors capable of providing the operator with feedback, for example visual or haptic, for the correct positioning of the movable elements along the working surface.

A further scope of the present invention is to provide the necessary tools for carrying out the method and the apparatus which carry out this method.

A further scope is to provide a machine for working wooden pieces equipped with said positioning system.

### Object of the invention

These and other results are obtained according to the invention with a precision positioning system, which can be coupled to a machine for working wooden pieces or similar of the type comprising a logic unit.

Therefore, the specific object of the present invention is a machine for working pieces as defined in claim 1.

A further specific object of the present invention is a positioning system as defined in the claims.

Preferred embodiments are defined in the dependent claims.

### Brief description of the figures

The present invention will be now described, for illustrative but not limitative purposes, according to its preferred embodiments, with particular reference to the figures of the enclosed drawings, wherein:
figure 1 shows a top view of a positioning system, object of the present invention, connected to a machine for working wooden pieces or similar and an operator in proximity to said machine;
figure 2 shows a perspective view of the positioning system of figure 1 connected to a machine for working wooden pieces or similar;
figure 3 shows the enlargement of a detail of figure 1; and
figure 4 shows a positioning aid device, which is included in the positioning system, object of the present invention.

### Detailed description

In the various figures, similar parts will be indicated with the same reference numbers.

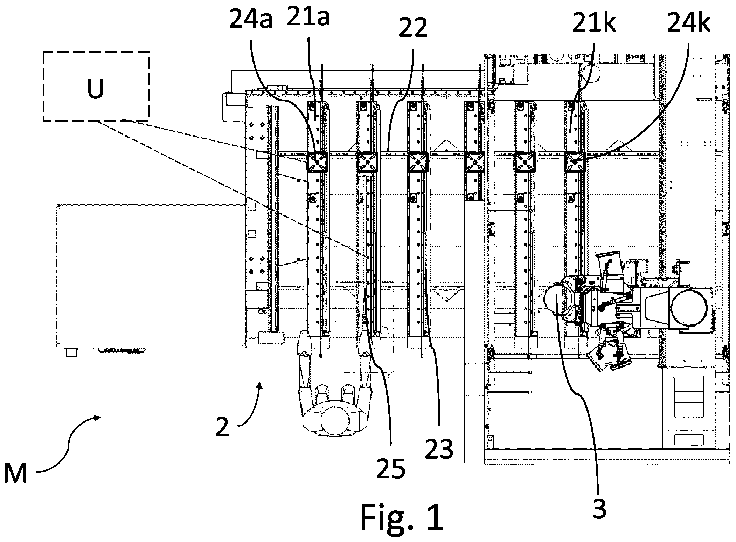

Referring to figure 1, an operator holds an aid device 25 to move a movable element 24_{b} along a supporting bar 21_{b} of a working surface 2 of a machine M for working wooden pieces or similar and positions said movable element 24_{b} at a specific height based on signals received from a precision positioning system connected to said machine M.

The precision positioning system is configured to connect to a machine M of the type comprising a logic control unit U that manages its operation and essentially includes a positioning aid device 25 for a plurality of movable elements 24_{a,b,...,k,...n} on said machine M, which can be functionally connected to said logic control unit U of said machine M.

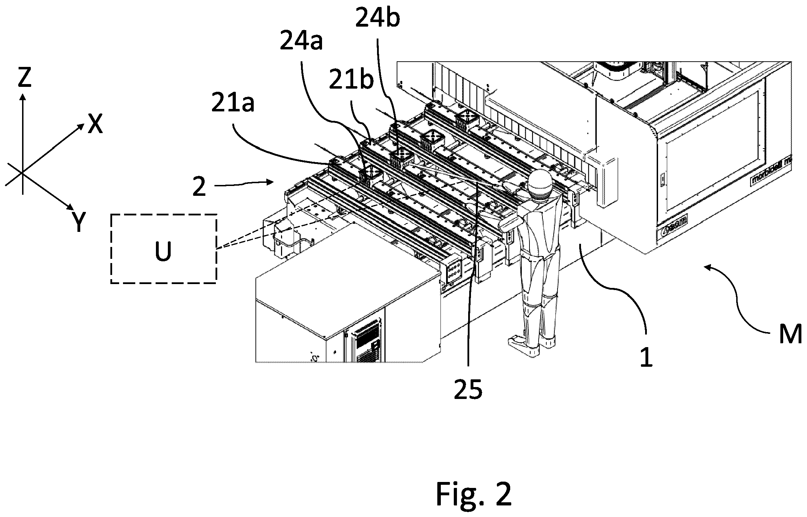

Referring to figures 1 and 2, the machine M for working wooden pieces, in particular a machine for working panels, comprises a base 1 for supporting said machine M, a working surface 2, one or more tools 3, and a logic interface U to manage the operation of the machine M.

Said one or more tools 3 can comprise an operator group and/or tools for milling, cutting, drilling, or edging operations.

The working surface 2, coupled to said base 1, in turn comprises a plurality of supporting or reference bars 21_{a,b,...,k,...n}, for supporting the pieces to be worked, and one or more movable elements 24_{a,b,...,k,...n} for fixing said pieces to be worked, each of which is slidably coupled and movable along one of said supporting bars 21_{a,b,...,k,...n}.

According to some embodiments, one or more movable elements 24_{a,b,...,k,...n} can be manually pushed or pulled along each supporting bar by an operator. Although said system can be integrated into working centers comprising supporting bars 21_{a,b,...,k,...n} slidably coupled and manually movable by an operator along said base 1, the system can be applied to machines having other configurations of the supporting bars.

Furthermore, the working surface 2 can comprise, as can be seen from figure 1, a fixed portion 22, integral with a movable supporting base of said plurality of supporting bars 21_{a,b,...,k,...n}, along which one or more movable elements are positioned to support or fix the workpiece. Each bar of said plurality of supporting bars 21_{a,b,...,k,...n} can slide on a fixed portion 22 of the working surface 2, to which a tool for working a piece, in particular a panel, is coupled.

Referring to figure 2, said plurality of supporting bars 21_{a,b,...,k,...n} can slide along a direction substantially parallel to a X-axis, and said one or more movable elements 24_{a,b,...,k,...n} is able to slide on each bar, in a direction substantially parallel to a Y-axis.

In particular, said one or more movable elements 24_{a,b,...,k,...n} can include one or more suction cups, or one or more clamps suitable for fixing the piece being machined and is slidably coupled to one or more supporting bars.

According to some embodiments, said plurality of supporting bars 21_{a,b,...,k,...n} is equipped with ducts for the vacuum supply, necessary to block the pieces to the suction cups.

One or more movable elements 24_{a,b,...,k,...n}, for example, six suction cups or clamps, which can be removed and then freely repositioned, individually or as a group, based on the machining to be performed on the piece to be worked, can be installed on each bar.

Each bar of said plurality of supporting bars 21_{a,b,...,k,...n} can comprise a guide 23 for the manual movement of said plurality of movable elements 24_{a,b,...,k,...n}.

Referring now to figure 2, a coordinate system XYZ is defined, such that said plurality of supporting bars 21_{a,b,...,k,...} has a main length along a Y-axis and can slide along said fixed portion 22 integral with an X-axis (fixed portion 22 indicated in figure 1).

Said plurality of movable elements 24_{a,b,...,k,...n} can be functionally coupled to said logic unit U and to said system by means of a sensor for their measurement and/or positioning.

In particular, the information detected can allow the logic unit U to know the position of said one or more movable elements 24_{a,b,...,k,...n,} and to inform the operator of the position in which to place said one or more movable elements 24_{a,b,...,k,...n}. On the other hand, detecting the current position of at least one movable element can allow the system defining instructions for the operator to correct the positioning of said element, in particular at distances greater than the length of the operator's arm.

Furthermore, said precision positioning system is capable of connecting to a measurement system capable of measuring position values of said one or more movable elements 24_{a,b,...,k,...n} with respect to said plurality of supporting bars 21_{a,b,...,k,...n} and/or with respect to a specific position, for example saved in said logic control unit U corresponding to a specific configuration of said working surface 2.

According to some embodiments, said measurement system is capable of measuring position values of each of said plurality of supporting bars (21_{a,b,...,k,...n}).

In particular, said measurement system can comprise a first fixed code, arranged on the base 1, along said fixed portion 22, and a plurality of second codes, or movable codes, each of which is integral with one or more of said supporting bars 21_{a,b,...,k,...n}, and at least one optical sensor or encoder capable of decoding said codes. In this way, a fixed code arranged on a fixed portion of said machine M, for example on the base 1 or on said fixed portion 22 of the working surface 2, can serve as a static reference for the positioning of the bars along the base 1 itself, and at least one movable code of said plurality of second movable codes, arranged on each bar, allows the detection of the positioning of each suction cup on each supporting bar.

Said codes can be of binary and/or OR-code type and joined to said machine M, for example, by means of double-sided tape, by magnetic coupling, or by gluing.

In some embodiments, one or more fixed codes are screen-printed on said base and one or more movable codes are screen-printed on each supporting bar and/or applied using an adhesive layer.

According to some embodiments, at least one sensor is installed on each supporting bar, capable of detecting a position value of each supporting bar with respect to said one or more fixed codes.

In some embodiments, one or more movable code sensors are installed on the suction cups so as to detect or read a position value of each movable element with respect to a corresponding movable code of a supporting bar.

According to some embodiments, the machine M for working pieces comprises one or more movable elements 24_{a,b,...,k,...n,} each of which is equipped with a position and/or movement sensor, and configured to support and/or hold said pieces to be worked, wherein each of said one or more movable elements is slidably coupled and movable along a respective bar of said plurality of bars 21_{a,b,...,k,...n}.

In some embodiments, the position and/or movement sensors, which each movable element of said movable elements 24_{a,b,...,k,...n} is equipped with, cooperate with the measurement system of the machine M, of which they are a part, in such a way as to measure position values of said one or more movable elements 24_{a,b,...,k....n} by reading the fixed and/or movable codes of the measurement system itself. In other words, said measurement system can include fixed codes and/or movable codes and position and/or movement sensors, for example, integrated in each of said movable elements 24_{a,b,...,k,...n}, wherein said position and/or movement sensors are capable of measuring the position of the movable elements 24_{a,b,...,k,...n} with respect to these codes.

As previously mentioned, said sensors can be, for example, optical sensors or encoders.

In some embodiments, since said optical sensors or encoders can measure the position of the movable elements 24_{a,b,...,k,...n} at different time instants, said sensors can provide an indication, for example by interpolation, of the movement of said movable elements 24_{a,b,...,k,...n}.

In some embodiments, each movable code is the same as the other movable codes, therefore each supporting bar is provided with a movable code equal to the code placed, for example, on the adjacent bar (previous or subsequent).

Furthermore, an additional identification code characteristic of that specific supporting bar, can be installed on each supporting bar, so that each movable element can recognize the supporting bar on which it is installed.

In particular, said fixed code can have a longitudinal development along said X-axis from a first reference point, for example an external end of said machine M, to a second reference point, for example coinciding with the coordinate along said X-axis corresponding to the tool 3.

In some embodiments, said measurement system comprises a control unit for receiving, from said logic control unit U, data relating to at least one target position and a real position of a movable device to be compared, as will be described later in this description.

Without departing from the scope of protection of the present invention, said logic control unit U can be a unit for managing the operation of said machine M, or a control unit included in said one or more movable elements 24_{a,b,...,k,...n}, for example, on one or more of the said movable elements.

In the embodiments in which said logic control unit U corresponds to the unit for managing the operation of said machine M, said logic control unit U is programmed, for example, to know or receive the target positions of said movable elements and to receive from the measurement system the real position of each movable device, or at least of a movable device which it is connected with, in such a way as to carry out the comparison between said positions, and in such a way as to communicate, for example by sending signals, with the positioning system aid device.

According to some embodiments in which a control unit is on one or more movable devices, the unit for managing the operation of said machine M can be configured to know the target positions of the movable elements, for example the suction cups, and to send said positions, for example sending the coordinates corresponding to said positions, to said control unit on the suction cup, which carries out the comparison between said target positions and the coordinates of the real position of the suction cup and communicates with the auxiliary device of the positioning system, for example, by sending signals or data relating to said comparison.

Examples of data relating to said comparison comprise one or more configurations of said working surface for machining said pieces to be worked, and position values measured by said measurement system.

According to some embodiments, said measurement system control unit allows data to be sent. In fact, following the reading of each fixed code, the measurement system control unit communicates the position of the movable element, for example, the suction cup, and/or the position of the supporting bar, with respect to the fixed code detected or the data relating to said survey.

Similarly, following the reading of each movable code, the measurement system control unit communicates the position of the suction cup with respect to the corresponding supporting bar.

Examples of data relating to position detection include the indication of the direction in which to move the movable element to reach the desired position. Once said data relating to the position has been received, the logic control unit communicates them to the positioning system, for example to the aid device 25.

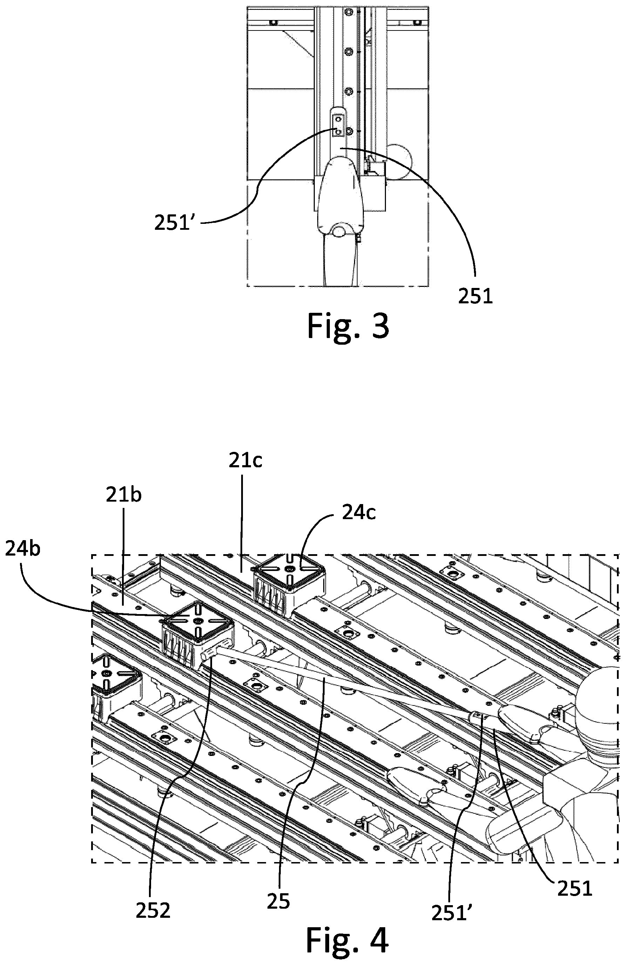

Referring to figures 3 and 4, said positioning aid device 25 comprises a proximal end and a distal end.

In particular, said device 25 is particularly advantageous for pushing said one or more movable elements 24_{a,b,...,k,...n} along each of said plurality of supporting bars 21_{a,b,...,k,...n} especially when the length of said bars is greater than or equal to 1000 mm.

In some embodiments, the main dimension of the device 25 can be between 500 mm and 3000 mm, preferably between 1000 mm and 1500 mm. In some alternative embodiments, the device 25 can be sized to reduce the weight and the possible bulk, in which its main dimension is included, for example, between 100 mm and 300 mm, so as to be easily held. In these embodiments, the device 25 is used for positioning, i.e. to inform the operator of the current positioning of the movable element associated with the device itself, but not to move the movable element.

Furthermore, said aid device 25 can be worn by the operator.

Said distal end can be configured to come into contact with at least one of said movable elements 24_{a,b,...,k,...n}.

In particular, said device 25 can comprise, near its distal end, a connection mechanism for connecting to one or more movable elements 24_{a,b,...,k,...n}.

In particular, said connection mechanism can comprise a magnet, a hook, or a protrusion, for example, substantially perpendicular to the main length of said device 25, to allow pushing and pulling in a controlled manner said one or more movable elements 24_{a,b,...,k,...n}.

In this way, the connection mechanism can prevent the aid device 25 from accidentally deviating from the movable element in movement, for example, while the device pushes the movable element.

Still near the distal end, said device 25 can comprise a physical hooking means 252 to hook to an element of said plurality of movable elements 24_{a,b,...,k,...n}.

Said physical hooking means 252 can hook one of said movable elements 24_{a,b,...,k,...n} in response to a change of the position of said element or following the detection of a movement by means of an accelerometer arranged on said movable element.

In some embodiments, said positioning system comprises a radio frequency identification system such that said device 25 comprises a radio frequency reader, for example an RFID reader, capable of reading one or more radio frequency labels (tags) arranged on said movable elements 24_{a,b,...,k,...n}, in such a way that said physical hooking means 252 hooks one of said movable elements 24_{a,b,...,k,...n}, when said movable element is positioned near the device 25 and the reader detects its proximity.

Referring to figure 4, said hooking means 252 can also comprise a plurality of fins, for example two, which extends from the distal end of the device 25 to rest on at least one movable element 24_{b}.

Furthermore, said positioning aid device 25 can comprise a handle 251 arranged near said proximal end configured to be handled by an operator.

Said device 25 can comprise at least one communication means capable of communicating with said one or more movable elements 24_{a,b,...,k,...n} and/or at least a signaling means 251' to inform an operator of the positioning of one of said one or more movable elements 24_{a,b,...,k,...n}.

Said communication means may comprise a radio, optical, and/or serial communication interface.

In particular, in some embodiments the communication between said device 25 and said plurality of movable elements 24_{a,b,...,k,...n} and/or said logic unit U occurs via a radio communication interface or a reception and transmission module in wireless or radio mode, for example, Zigbee, Wi-Fi, or Bluetooth. In this way, it is possible to obtain a low-cost and clutter-free connection.

Further communication means include at least one serial communication interface, for example, rs232, canopen, or modbus type.

In this way, the presence of one or more serial ports can guarantee signal continuity at any time.

In some embodiments, communication may occur via infrared radiation.

Said signaling means 251' can comprise an indicator with optical feedback, with haptic feedback, and/or a screen on which representing the information relating to the positioning of the suction cups and/or bars, to be reported to the operator.

In this way, for example, using one or more LEDs -Light Emitting Diode-, a screen (monitor), or other optical feedback means, it is possible indicating the direction and/or verse of the correct positioning.

In particular, it is possible to represent on the screen the indicated direction of the correct positioning, even at different time instants. In this way, a graphic evolution of the direction indicated by the signaling means 251' can be traced.

Haptic feedback, for example by means of a vibration having a plurality of intensities, can facilitate the operator to ensure that the positioning is correct.

In some embodiments, the vibration can signal whether the positioning is correct and the optical feedback can signal the direction to follow to correct the positioning of said one or more movable elements 24_{a,b,...,k,...n}.

In some configurations of said system, said positioning aid device 25 can comprise a local logic unit capable of communicating with said (global) logic unit U of said machine M and/or capable of communicating with each of said one or more movable elements 24_{a,b,...,k,...n} and/or capable of communicating with said measurement system control unit.

The operation of the system described above is as follows.

When an operator has to manually move said one or more movable elements 24_{a,b,...,k,...n} equipped with position and/or movement sensors, in a machine M of the type comprising a logic control unit U, along the respective supporting bars 21_{a,b,...,k,...n} on which they are positioned, to bring said working surface 2 into a specific working configuration, especially to minimize positioning errors of said one or more movable elements 24_{a,b,...,k,...n}, the operator needs a unique and precise reference system and indicators capable of informing him on the corrections to be made.

Therefore, said precision positioning system can be coupled to a measurement system capable of measuring position values of said one or more movable elements 24_{a,b,...,k,...n} with respect to said plurality of supporting bars 21_{a,b,...,k,...n} and/or with respect to a specific position, for example saved in said logic control unit U corresponding to a specific configuration of said working surface2.

The measurement system then sends said position values to said logic control unit U.

At this point, said logic control unit U can carry out a comparison between said stored configurations and said received position values and send corresponding signals to said system, which makes them available to the operator to manually move said plurality of supporting bars 21_{a,b,...,k,...n} and/or said one or more movable elements 24_{a,b,...,k,...n}.

The signals corresponding to the position to be reached and the accuracy of the positioning are sent by the system to the operator via indicators present on said device 25 to assist in the positioning of said plurality of movable elements 24_{a,b,...,k,...n}.

In particular, the operation comprises the definition of a height or space from a reference point on which to position one or more movable elements 24_{a,b,...,k,...n} with respect to said working surface 2.

Said definition of the quota can be saved beforehand in said logic unit U or entered manually by an operator.

In some embodiments, the coordinates of the movable elements and/or supporting bars corresponding to one or more configurations of said working surface 2 for working said pieces are stored in said logic unit U. The measurement system, coupled to the working surface 2, as will be described later, is capable of measuring position values of the supporting bars 21_{a,b,...,k,...n} and movable elements 24_{a,b,...,k,...n} and send them to the logic unit U. Once these position values have been received, the logic unit U carries out a comparison between said stored configurations and said received position values and sends the position values to the aid device 25, which emits signals corresponding to this comparison.

Therefore, the comparison between a configuration of the working surface 2 for working the pieces and the received position values, for example, the received coordinates, is ensured by the fact that the stored configurations include the coordinates of the movable elements and/or of the supporting bars, relating to each working of the pieces.

Therefore, to verify the correct positioning of each of the movable elements, a height at which said movable element is positioned is detected or measured with respect to said working surface 2.

This detection can take place via a camera arranged on each element of said plurality of movable elements or via sensors present in said positioning aid device 25, once said device 25 has been coupled, mechanically or electronically, to one or more movable elements.

In some embodiments, each of said movable elements 24_{a,b,...,k,...n} comprises a control unit equipped with at least one movement or acceleration detector, for example, an accelerometer, and a communication circuit. When one of said movable elements 24_{a,b,...,k,...n} comes into contact with the aid device 25, for example, when it is touched by the device 25 itself or said movable element moves, the control unit activates the communication of the data detected by the movement or acceleration detector. In particular, the accelerometer detects the data referring to the movement of said activated movable element and the communication circuit sends such data to the logic control unit U, which receives the data detected by the accelerometer referring to the element that moved, communicates it to the aid device 25, which is associated with said movable element in movement.

Therefore, the aid device 25 is associated with the only movable element in movement, while the other movable elements 24_{a,b,...,k,...n} are not moved.

In some alternative embodiments, following the activation of a movable element, the accelerometer detects its movement and the communication circuit sends the acceleration data detected directly to the aid device 25, which is associated with said movable element in movement.

Therefore, without departing from the scope of protection of the present invention, the information detected by an accelerometer on said plurality of movable elements 24_{a,b,...,k,...n} is sent to the positioning system by the logic unit U of the machine M, which has previously processed them or directly by said one or more movable elements 24_{a,b,...,k,...n} via, for example, a radio connection.

Subsequently, the positioning system can calculate or measure a distance between said detected quota and said defined quota of said movable element of said plurality of movable elements 24_{a,b,...,k,...n} with respect to said working surface 2.

In some embodiments, the positioning system may comprise an integrated local logic unit, which performs the calculation and information transmission operations.

In particular, the system is capable of informing, through said aid device 25 functionally connected to a logic unit U, an operator to correct the positioning of each of said one or more movable elements 24_{a,b,...,k,...n} and minimize the distance between said detected height and said defined height.

Furthermore, as mentioned above, the system can detect a movement of one or more movable elements 24_{a,b,...,k,...n} by means of a detector, for example, an accelerometer, with which said one or more movable elements are equipped. In this way, the system interacts with the detectors of a single movable element that, with its movement, has activated a detector with which it is equipped.

Furthermore, the system can detect a contact between a movable element and said positioning aid device 25. This combination is advantageous when the operator realizes that said movable element is not in the correct position, but requires a guide to adequately correct said positioning. Therefore, the operator can hook the element with the device 25 and wait for instructions from the system.

Furthermore, said system can detect one or more movable elements 24_{a,b,...,k,...n} in correspondence with said positioning aid device 25. In this case the system is capable of detecting the movable element and determine whether it is necessary to correct its positioning before the physical hooking with the device 25.

### Advantages

An advantage of the present invention provides for the presence of a machine for working wooden pieces, equipped with a positioning system and a measurement system of one or more movable elements used for supporting or fixing the pieces to be worked.

A further advantage of the present invention provides for the presence of a positioning system which allows the movable elements for supporting or fixing the piece to be positioned with less uncertainty at a given height on a supporting bar of a machine for working wooden pieces or the like by means of a mechanical positioning means which includes sensors and indicators to inform the operator on the operations to be performed.

A further advantage of the invention is given by the presence of a plurality of sensors capable of providing the operator with feedback for the correct positioning of the movable elements along the working surface.

Another advantage is to provide a system for precision positioning of movable elements that can be connected to a machine having one or more movable elements equipped with position and/or movement sensors.

The positioning system of the present invention allows the operator to know whether a movable supporting, fixing, or stopping element of the piece is in the correct position and also to provide easy-to-read indications to the operator for moving said element.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (M) for working pieces, such as panels made of wood, glass, fiberglass, plastic, metal, ceramic, or the like, said machine (M) comprising:
- a working surface (2), in its turn comprising a plurality of supporting bars (21_{a,b,...,k,...n}), for supporting the pieces to be machined;
- one or more movable elements (24_{a,b,...,k,...n}), each of which configured to support and/or retain said pieces, wherein each of said one or more movable elements is slidably coupled and movable along a respective bar of said plurality of bars (21a_{,b,...,k,...n});
- a measuring system capable of measuring the position values of said one or more movable elements (24_{a,b,...,k,...n});
- at least one control logic unit (U) operatively connected to the measurement system to receive said position values measured by said measurement system, and configured for
receiving one or more configurations of said working surface (2) for machining said pieces, and
making a comparison between said one or more configurations and said position values received from the measurement system,
- a precision positioning system of said one or more movable elements, equipped with a positioning aid device (25) of said one or more movable elements (24_{a,b,...,k,...n}), wherein said machine (M) is **characterized in that**
said precision positioning system comprises at least one signaling device (251'), capable of cooperating with said positioning aid device (25), to provide indications to an operator, for the positioning of one or more movable elements (24_{a,b,...,k,...n}), based on said comparison.

2. Machine (M) according to the preceding claim, wherein said positioning aid device (25) comprises a communication device for the functional connection with said at least one logic control unit (U) to receive data and/or signals relating to said comparison.

3. Machine according to claim 1 or 2, **characterized in that** said at least one logic control unit (U) is a unit for managing the operation of said machine (M).

4. Machine according to claim 1 or 2, **characterized in that** said at least one logic control unit (U) is a control unit included in said one or more movable elements (24_{a,b,...,k,...n}).

5. Machine according to the preceding claim, **characterized in that** it comprises a unit for managing the operation of said machine (M) configured to send said one or more configurations of said working surface (2) for machining said pieces to said control unit included in said one or more movable elements (24_{a,b,...,k,...n}).

6. Machine (M) according to any one of the preceding claims, wherein at least one of said movable elements (24_{a,b,...,k,...n}) comprises a detecting device configured to detect movement and/or acceleration of said at least one of said movable elements (24_{a,b,...,k,...n}), and a communication circuit operatively connected, and configured to communicate, with said positioning aid device (25) at least when the detecting device detects movement and/or acceleration of said at least one of said movable elements (24_{a,b,...,k,...n}).

7. Machine (M) according to any one of the preceding claims, wherein said positioning aid device (25) extends mainly along one direction and comprises:
a proximal end including a handle (251) arranged near said proximal end configured to be gripped by an operator; and
a distal end configured to contact one or more movable elements (24_{a,b,...,k,...n}).

8. Machine (M) according to the preceding claim, **characterized in that** said positioning aid device (25) comprises a hollow outer body and an inner body extendable from said outer body in a telescopic way, to modify the distance between said distal and proximal ends.

9. Machine (M) according to any one of the preceding claims, **characterized in that** said signaling device (251') is arranged near said handle (251).

10. Machine (M) according to any one of the preceding claims, wherein said signaling device (251') comprises an indicator with optical feedback, in particular at least one LED, and/or with haptic feedback, and/or a screen configured to show a graphic indicator.

11. Machine (M) according to any one of claims 2 - 10, wherein said communication device comprises a radio, and/or optical, and/or serial communication interface.

12. Machine (M) according to any one of the preceding claims, wherein said positioning system comprises a physical hooking means (252) for hooking to a base of said plurality of movable elements (24_{a,b,...,k,...n}).

13. System for precision positioning of movable elements (24_{a,b,...,k,...n}), said system being connectable to a machine (M) for machining pieces, such as panels made of wood, glass, fiberglass, plastic, metal, ceramic or the like according to any one of claims 1 - 12, said system comprising:
a positioning aid device (25) of said one or more movable elements (24_{a,b,...,k,...n}); and
at least one signaling device (251'), capable of cooperating with said positioning aid device (25), to provide indications to an operator, for positioning at least one element of said plurality of movable elements (24_{a,b,...,k,...n}), on the basis of said comparison between said one or more configurations and said received position values.

14. Method of precision positioning moving elements (24_{a,b,...,k,...n}), in a machine (M) of the type comprising a logic control unit (U) **characterized in that** it comprises the steps of:
A. defining a height at which positioning at least one movable element of a plurality of movable elements (24_{a,b,...,k,...n}) with respect to a working surface (2);
B. detecting a height at which said movable element of said plurality of movable elements is positioned (24_{a,b,...,k,...n}) with respect to said working surface (2);
C. calculating or measuring a distance between said measured height and said defined height of said movable element of said plurality of movable elements (24_{a,b,...,k,...n}) with respect to said working surface (2);
D. informing, by means of an aid device (25) functionally connectable to a logic unit (U), an operator to correct the positioning of said movable element of said plurality of movable elements (24_{a,b,...,k,...n}) to minimize said distance.

15. Method according to the previous claim **characterized in that** it comprises the steps of:
E. detecting a movement of a movable element of said plurality of movable elements (24_{a,b,...,k,...n}) by means of a detecting device included in said movable element or detecting a contact between said movable element and said positioning aid device (25), or detecting a movable element of said plurality of movable elements (24_{a,b,...,k,...n}) at said positioning aid device (25); and **in that** of carrying out steps A-D with said movable element of step E.
